(19) Europäisches Patentamt
European Patent Office
Office européen des brevets

(11) **EP 3 994 902 B1**

(12) **EUROPÄISCHE PATENTSCHRIFT**

(45) Veröffentlichungstag und Bekanntmachung des Hinweises auf die Patenterteilung:
**16.11.2022 Patentblatt 2022/46**

(21) Anmeldenummer: **21723224.8**

(22) Anmeldetag: **03.05.2021**

(51) Internationale Patentklassifikation (IPC):
*H04W 4/46* (2018.01)    *H04L 9/32* (2006.01)
*G08G 1/01* (2006.01)    *G08G 1/0967* (2006.01)
*G08G 1/07* (2006.01)    *G08G 1/16* (2006.01)

(52) Gemeinsame Patentklassifikation (CPC):
**H04L 9/3239; G08G 1/0145; G08G 1/096716;
G08G 1/096725; G08G 1/096791; H04L 9/50;**
H04L 2209/84

(86) Internationale Anmeldenummer:
**PCT/EP2021/061502**

(87) Internationale Veröffentlichungsnummer:
**WO 2021/249695 (16.12.2021 Gazette 2021/50)**

(54) **VERFAHREN ZUR KOOPERATIVEN RESSOURCENALLOKATION ZUM AUSFÜHREN VON BEWEGUNGSMANÖVERN IN EINEM STRASSENBEREICH SOWIE ZUGEHÖRIGE STEUERSCHALTUNG UND KRAFTFAHRZEUG MIT EINER SOLCHEN STEUERSCHALTUNG**

METHOD FOR COOPERATIVE RESOURCE ALLOCATION FOR PERFORMING MOVEMENT MANOEUVRES IN A ROAD AREA, AND RELATED CONTROL CIRCUIT AND MOTOR VEHICLE HAVING SUCH A CONTROL CIRCUIT

PROCÉDÉ D'ALLOCATION COOPÉRATIVE DE RESSOURCES POUR L'EXÉCUTION DE MANOEUVRES DE DÉPLACEMENT DANS UNE ZONE ROUTIÈRE, CIRCUIT DE COMMANDE CORRESPONDANT ET VÉHICULE À MOTEUR ÉQUIPÉ D'UN TEL CIRCUIT DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2020 DE 102020115432**

(43) Veröffentlichungstag der Anmeldung:
**11.05.2022 Patentblatt 2022/19**

(73) Patentinhaber: **Audi AG
85045 Ingolstadt (DE)**

(72) Erfinder: **RAINER, Julia
85049 Ingolstadt (DE)**

(74) Vertreter: **Bauer, Dominik Michael
Audi AG
Patentabteilung
85045 Ingolstadt (DE)**

(56) Entgegenhaltungen:
**EP-A1- 3 525 158**

- **LEI ZHANG ET AL: "Blockchain based secure data sharing system for Internet of vehicles: A position paper", VEHICULAR COMMUNICATIONS, Bd. 16, 1. April 2019 (2019-04-01), Seiten 85-93, XP055600646, ISSN: 2214-2096, DOI: 10.1016/j.vehcom.2019.03.003**

EP 3 994 902 B1

**Beschreibung**

Die Erfindung betrifft Verfahren zur kooperativen Ressourcenallokation für das Ausführen von Bewegungsmanövern von Verkehrsteilnehmern in zumindest einem vorbestimmten Straßenbereich. Ein solcher Straßenbereich kann beispielsweise eine Kreuzung sein, über welche die Verkehrsteilnehmer passieren möchten. Der Straßenbereich wird in mehrere Ressourcen eingeteilt, die jeweils nur einer der Verkehrsteilnehmer zurzeit belegen darf. Zu der Erfindung gehört auch eine Steuervorrichtung, mittels welcher ein Verkehrsteilnehmer an dem Verfahren teilnehmen kann. Schließlich sieht die Erfindung ein Kraftfahrzeug mit einer solchen Steuervorrichtung vor.

Anwendungsfälle für die sogenannte Direkt-V2X-Kommunikation, als für ein Ad-hoc-Funknetzwerk, das von Verkehrsteilnehmer in gegenseitiger Funkreichweite ohne Basisstationen gebildet werden kann, müssen komplexe Situationen mit mehreren Verkehrsteilnehmern abdecken können. Die geschieht heutzutage nur für einzelne Verkehrsmechanismen, wie z.B. das sogennannte "Do not Pass Warning DNPW" oder "Emergency Vehicle Warning".

Damit vernetzte und automatisierte Fahrfunktionen implementiert werden können, müssen aber möglichst viele Verkehrsszenarien abgedeckt werden. Bis heute gibt es nur bruchstückhaft Methoden, um Kraftfahrzeuge sicher und effizient über Ad-hoc-Funknetzwerke wie V2V/V2P/V2I zu koordinieren, wie z.B. durch verschiedene Kreuzungen. Ein Beispiel ist das "Intersection Movement Assist", wo die On-Board Applikation der OBU (On-Board-Unit) eines Kraftfahrzeugs die Kollisionswahrscheinlichkeit berechnet. Eine weitere existierende Möglichkeit, Verkehrsteilnehmer sicher über V2X durch Kreuzungen zu führen, ergibt sich über V2I, wo eine RSU (Road-Side-Unit) als Manager und "Virtuelle Ampel" fungiert. Damit muss aber stets neue Infrastruktur an jeder Kreuzung gebaut werden, weil die Kraftfahrzeuge ohne eine kontrollierende Einheit nicht koordiniert werden können.

Aus der CN 108 492 550 A ist ein Verfahren für eine selbstorganisierende V2X-HighSpeed-Kraftfahrzeugflotte basierend auf einer Blockchain-Technologie bekannt. Das Verfahren teilt Kraftfahrzeuge in einer vorgegebenen Umgebung einer temporären Kraftfahrzeugflotte zu und koordiniert deren Fahrt mittels V2X-Kommunikation basierend auf der Blockchain-Technologie, um eine Flottenfahrt kostengünstig und effizient zu gestalten.

Aus der EP 3 316 657 A1 sind ein Verfahren und eine Vorrichtung zur Kraftfahrzeugverwaltung in einem Fahrzeugnetzwerk bekannt. Das Verfahren erfasst Statusinformationen von Kraftfahrzeugen in einem Netzwerk, insbesondere V2V-Netzwerk, und verwaltet diese, indem eines der Kraftfahrzeuge als Leitfahrzeug eingesetzt wird, um anhand einer leitfahrzeugseitigen Einteilung von Funkkanal-Ressourcen diese für weitere der Kraftfahrzeuge freizugeben.

Aus der EP 3 386 142 A1 ist bekannt, wie mittels einer Blockchain eine gemeinsam nutzbare Speichereinrichtung bereitgestellt werden kann.

Aus der EP 3 525 158 A1 sind Verfahren, Vorrichtungen und Computerprogramme für einen ersten Straßenressourcennutzer und für eine Straßenressourcen-Zuteilungseinheit bekannt. Das Verfahren für den ersten Straßenressourcennutzer umfasst ein Reservieren einer Straßenressource durch Übermittlung einer Anforderung für die Straßenressource an einen zweiten Straßenressourcennutzer oder an eine Straßenressourcen-Zuteilungseinheit, ein Empfangen einer Bewilligung für die Straßenressource von dem zweiten Straßenressourcennutzer oder von der Straßenressourcen-Zuteilungseinheit, und Speichern von Informationen bezüglich der Zuteilung für die Straßenressource in einer Speichereinheit, die mit dem ersten Straßenressourcennutzer verbunden ist.

Aus der Veröffentlichung von Lei Zhang et al ("Blockchain based secure data sharing system for Internet of vehicles: A position paper", Vehicular Communications, Bd. 16, 1. April 2019; DOI: 10.1016/j.vehcom.2019.03.003) ist ein Blockchain-basiertes sicheres Datenaustauschsystem für das Internet von Fahrzeugen bekannt.

Durch den Stand der Technik ist keine Möglichkeit geschaffen, dass Verkehrsteilnehmer ihre Bewegungsmanöver in einem Straßenbereich miteinander ohne zentrales Leitsystem koordinieren oder miteinander abstimmen können.

Der Erfindung liegt die Aufgabe zugrunde, Verkehrsteilnehmer miteinander zu koordinieren oder abzustimmen, damit diese aufeinander abgestimmte Bewegungsmanöver in diesem Straßenbereich durchführen können.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung wird ein Verfahren bereitgestellt, um kooperativ Ressourcen für das Ausführen von Bewegungsmanövern in zumindest einem vorbestimmten Straßenbereich zu allokieren oder zuzuteilen. Als jeweilige Ressource kann beispielsweise eine Teilfläche in dem Straßenbereich verwaltet werden, sodass die Ressourcen insgesamt den Straßenbereich ergeben. "Kooperativ" meint hierbei, dass die beteiligten Verkehrsteilnehmer sich gegenseitig auf die Zuteilung der Ressourcen einigen, ohne dass eine zentrale oder übergeordnete Vergabestelle für die Ressourcen notwendig ist. Der Straßenbereich ist hierzu durch eine vorbestimme Einteilungsvorschrift in mehrere Ressourcen eingeteilt, also beispielsweise mehrere Teilflächen, und es wird eine Speichereinrichtung für Reservierungsdaten zum exklusiven Reservieren der jeweiligen Ressource bereitgestellt, die jedem in einem vorbestimmten, den Straßenbereich umfassenden Gebiet befindlichen Verkehrsteilnehmer zugänglich gemacht wird. Somit kann also jeder Verkehrsteilnehmer, der den Straßenbereich nutzen möchte, also durchfahren möchte oder allgemein (z.B. im Falle eines Fußgängers) passieren möchte, auf die Speichereinrichtung zugreifen, um anhand der Reservierungsdaten zu erkennen, welche Ressourcen bereits belegt oder reserviert sind und welche Ressourcen noch verfügbar sind.

Eine Steuerschaltung eines jeweiligen Verkehrsteilnehmers, der sich dem Straßenbereich nähert und/oder in dem Straßenbereich befindet und in welchem durch eine vorgegebene Reisestrecke eine notwendige Eintrittsstelle in den Straßenbereich und eine notwendige Austrittsstelle aus dem Straßenbereich bekannt ist, plant eine Bewegungsroute von der Eintrittsstelle zu der Austrittsstelle über zumindest eine oder einige der Ressourcen hinweg in Abhängigkeit von den in der Speichereinrichtung aktuell gespeicherten Reservierungsdaten. Die Reisestrecke des Verkehrsteilnehmers kann beispielsweise durch Navigationsdaten beschrieben sein, die angeben, dass eine Reiseroute von der aktuelle Position aus über den Straßenbereich hinweg oder durch den Straßenbereich hindurch zu einem Reiseziel führt. Daraus ergeben sich auch die Eintrittsstelle (Einfahrt) und die Austrittsstelle (Ausfahrt). Der Verkehrsteilnehmer reserviert dann gemäß der geplanten Bewegungsroute selber die hierfür benötigten Ressourcen durch Erzeugen von eigenen Reservierungsdaten in der Speichereinrichtung. Mittels Auslösen von Bewegungsmanövern werden dann die zumindest eine Ressource des Straßenbereichs gemäß den Reservierungsdaten nacheinander durch den Verkehrsteilnehmer belegt. Das Auslösen von Bewegungsmanövern kann beispielsweise im Falle einer autonomen Fahrfunktion eines Kraftfahrzeugs darin bestehen, dass ein Trajektorienplaner eines Autopiloten Steuersignale erhält, um die Trajektorie der autonomen Fahrfunktion gemäß der geplanten Bewegungsrouten zu bilden. Im Falle eines menschlichen Fahrers oder eines Fußgängers kann vorgesehen sein, dass das Auslösen von Bewegungsmanövern darin besteht, dass der Fahrer oder Fußgänger Ausgaben (beispielsweise sprachlich und/oder grafisch und/oder haptisch) Manövrieranweisungen erhält. Ein Bewegungsmanöver kann beispielsweise das Befahren einer Fahrspur und/oder das Abbiegen und/oder einen Fahrspurwechsel umfassen, um nur Beispiele zu nennen.

Mit anderen Worten nutzt der Verkehrsteilnehmer die Ressourcen des Straßenbereichs gemäß den von ihm in der Speichereinrichtung eingetragenen Reservierungsdaten, sodass er sicher sein kann, dass die Belegung der Ressourcen den anderen Verkehrsteilnehmern über die in der Speichereinrichtung gespeicherten Reservierungsdaten bekannt ist und diese Verkehrsteilnehmer sein Bewegungsmanöver nicht stören werden. In einem Verkehrsteilnehmer in Form eines Kraftfahrzeugs kann die Reservierung beispielsweise durch eine Steuerschaltung eines Steuergeräts oder eines Verbunds aus Steuergeräten durchgeführt werden. Ein Verkehrsteilnehmer in Form eines Fußgängers oder Fahrradfahrers kann beispielsweise eine solche Steuerschaltung als ein Bediengerät mit sich führen, beispielsweise als ein Smartphone oder als eine Smartwatch.

Durch die Erfindung ergibt sich der Vorteil, dass jedem Verkehrsteilnehmer bekannt ist, wie er sich verhalten muss, um sich mit jedem anderen Verkehrsteilnehmer koordiniert in dem Straßenbereich zu verhalten, sodass hierdurch die Planung der Bewegungsrouten aller Verkehrsteilnehmer in dem Straßenbereich koordiniert oder verschränkt wird, ohne dass hierzu eine übergeordnete Managementeinheit, beispielsweise die eingangs beschriebene RSU, für den Straßenbereich installiert werden muss. Die anderen Verkehrsteilnehmer müssen nicht direkt bekannt sein, sodass sie nicht direkt identifizierbar sein müssen, was aus datenschutzrechtlichen Gründen vorteilhaft ist. Sie können sich als eine "Einheit" in der Speichereinrichtung eintragen oder registrieren, brauchen aber nicht mit ihren Merkmalen kenntlich gemacht werden und sind dadurch zwar über den eingetragenen Zeitraum identifizierbar als z.B. "Fahrzeug Nr. 305" aber nicht über ihre externen Merkmale zu erkennen wie z.B. Fahrzeugmodell und Farbe oder Nummernschild.

Erfindungsgemäß wird als die gemeinsame Speichereinrichtung eine Datenstruktur bereitgestellt, die über ein Ad-hoc-Funknetzwerk zwischen den Verkehrsteilnehmern in dem Gebiet synchronisiert (inhaltsgleich) gehalten wird. Die Synchronisation stellt somit sicher, dass die Datenstruktur inhaltsgleich in den synchrongehaltenen Verkehrsteilnehmern wird. Hierzu senden Verkehrsteilnehmer Kopien ihrer lokal gespeicherten Datenstruktur an jeweils einen anderen Verkehrsteilnehmer über das Ad-hoc-Funknetzwerk. Ein Ad-hoc-Funknetzwerk kann insbesondere durch die sogenannte V2X-Kommunikation (V2X - Vehicle to everything) oder die V2V-Kommunikation (V2V - Vehicle to Vehicle) realisiert werden. Sie kann auf einer 5G-Mobilfunktechnologie und/oder einer Wi-Fi-Technologie beruhen.

Um hierbei sicherzustellen, dass die Verkehrsteilnehmer erkennen, welche die aktuellste Version der Datenstruktur ist, wenn z.B. in einem Verkehrsteilnehmer mehr als eine Version der Datenstruktur vorliegt (weil beispielsweise eine eigene Datenstruktur erstellt wurde und aus einem anderen Verkehrsteilnehmer eine Datenstruktur empfangen wurde), umfasst in einer Ausführungsform die Datenstruktur eine Blockchain, in welcher die Reservierungsdaten durch die Steuerschaltung des jeweiligen Verkehrsteilnehmers als jeweiliger neuer Datenblock angehängt werden. Mittels einer Blockchain lässt sich in ein sich bekannter Weise die Datenstruktur dahingehend in den Verkehrsteilnehmern selbst für den Fall angleichen, dass zwei Verkehrsteilnehmer gleichzeitig Reservierungsdaten in ihrer lokalen Kopie der Datenstruktur eintragen und diese dann an die übrigen Verkehrsteilnehmer aussenden. Hierzu kann der aus dem Stand der Technik für Blockchains bekannte Abstimmungsprozess genutzt werden.

Des Weiteren generiert jeweils ein solcher Verkehrsteilnehmer, der sich dem Straßenbereich allein nähert, für den Fall, dass der Straßenbereich leer ist, die Speichereinrichtung dynamisch. Mit anderen Worten wird immer dann, wenn der Straßenbereich vorübergehend von keinem Verkehrsteilnehmer genutzt worden ist und somit kein Ad-hoc-Funknetzwerk und keine Speichereinrichtung, beispielsweise keine Blockchain, vorliegt, bei Bedarf vom ersten Verkehrsteilnehmer, der nach einem solchen Zeitraum den Straßenbereich benutzt oder sich ihm nähert, eine Version der Speichereinrichtung selbstständig initialisiert oder erzeugt und dann für den Fall, dass sich ein weiterer Verkehrsteilnehmer nähert, diesem z.B. über ein Ad-hoc-Funknetzwerk diese Speichereinrichtung mitgeteilt oder bereitgestellt.

Die Erfindung umfasst auch Ausführungsformen, durch die sich zusätzliche Vorteile ergeben.

In einer Ausführungsform wird als jeweiliger Straßenbereich einer der folgenden vorgesehen: eine Straßenkreuzung, ein Kreisverkehr, eine Einfahrt, eine Ausfahrt. In einem solchen Straßenbereich treffen mehrere Straßen oder Fahrwege zusammen und es ist eine Koordination des zusammenfließenden Straßenverkehrs notwendig. Dies kann nun ohne aufwändige Installation zusätzlicher RSUs geschehen.

In einer Ausführungsform ist das Bewegungsmanöver eine Fahrt eines autonom fahrenden Kraftfahrzeugs. Mit anderen Worten wird davon ausgegangen, dass sich mittels des Verfahrens Kraftfahrzeuge mit autonomer Fahrfunktion untereinander koordinieren. Es ergibt sich der Vorteil, dass diese Kraftfahrzeuge ohne zusätzliche, fahrzeugexterne Geräte untereinander ihr Verhalten oder ihrer Bewegungsmanöver (Fahrmanöver) in dem Straßenbereich abstimmen oder koordinieren können. Ein autonom fahrendes Kraftfahrzeug ist insbesondere ein Kraftfahrzeug mit dem Automatisierungsgrad Level 3 und höhere gemäß der Norm SAE J3016.

In einer Ausführungsform geben die jeweiligen Reservierungsdaten die zu reservierende Ressource und einen Belegungszeitraum für die Ressource an. Mit anderen Worten erfolgt die Reservierung für eine Ressource zeitbegrenzt, d. h. der Belegungszeitraum definiert eine Anfangszeitpunkt und einen Endzeitpunkt für die Belegung durch den jeweiligen Verkehrsteilnehmer, der die Reservierungsdaten einträgt. Ergibt sich der Vorteil, dass sich zwei Verkehrsteilnehmer auch zeitlich koordinieren können und somit Fahrmanöver zeitlich hintereinander in derselben Ressource durchführen und dies planen oder abstimmen können.

In einer Ausführungsform werden bei zumindest einem der Verkehrsteilnehmer die Reservierungsdaten für die gesamte Bewegungsroute bei Annäherung an den Straßenbereich festgelegt. Mit anderen Worten wird schon im Voraus für die Zeit ab dem Eintritt in den Straßenbereich für den Verkehrsteilnehmer festgelegt, wie er sich in dem Straßenbereich in Bezug auf Aufenthaltsort und jeweiligen Zeitpunkt zu verhalten hat (vorgegebene Bewegungstrajektorien, die Bewegungsweg und Zeitverlauf festlegt).

In einer Ausführungsform werden bei zumindest einem der Verkehrsteilnehmer die Reservierungsdaten dynamisch in mehreren Schritten in die Speichereinrichtung eingetragen, während sich der jeweilige Verkehrsteilnehmer in dem Straßenbereich befindet. Hierdurch ist in vorteilhafter Weise eine Umplanung oder eine dynamische Anpassung möglich, wodurch auf Ereignisse, wie beispielsweise einen Verkehrsunfall oder eine Panne eines anderen Verkehrsteilnehmers, reagiert werden kann.

In einer Ausführungsform werden durch zumindest einen der Verkehrsteilnehmer die Reservierungsdaten zum Umbuchen zumindest einer Ressource geändert und/oder ergänzt, während sich der jeweilige Verkehrsteilnehmer in dem Straßenbereich befindet. Mit anderen Worten kann ein Verkehrsteilnehmer von sich aus die geplante Belegung von Ressourcen verändern und jeder übrige Verkehrsteilnehmer kann darauf reagieren. Hierdurch kann für den Fall, dass ein neues Ereignis den Verkehrsteilnehmer zur Abänderung der Planung seiner Bewegungsroute zwingen, dennoch eine Koordination mit jedem übrigen Verkehrsteilnehmer erreicht werden.

In einer Ausführungsform wird als die Einteilungsvorschrift eine digitale Straßenkarte zugrunde gelegt, in welcher die Ressourcen für ein Straßennetz definiert sind. Mit anderen Worten ist die Einteilungsvorschrift durch Kartendaten einer digitalen Straßenkarte gegeben. In diesen Kartendaten kann zu einem oder mehreren Straßenbereichen jeweils eine Einteilung in Ressourcen vorgenommen werden. Diese Kartendaten können von jedem Verkehrsteilnehmer beispielsweise aus zumindest einer Servereinrichtung (beispielsweise einem Server des Internets oder einer Computercloud) bezogen oder heruntergeladen werden. Eine alternative Form der Einteilungsvorschrift kann beispielsweise eine dynamische Einteilung durch einen oder mehrere Verkehrsteilnehmer vorsehen. Zusätzlich oder alternativ dazu ist gemäß weiterer Ausführungsformen vorgesehen, dass Schwarmdatenpunkte angegeben sind, durch welche die Ressourcen identifiziert worden sind (also z.B. direkt durch mehrere Kraftfahrzeuge als mögliche Ressourcen gemessen und an einen Server gemeldet wurden), und/oder dass geographische Abschnitte nach einem GNSS-Datenformat (GNSS - Global Navigation Satellite System, z.B. das GPS - Global Positioning System) angegeben sind, welche z.B. die Grenzen der Ressourcen definieren.

In einer Ausführungsform ist als jeweilige Ressource eine Teilfläche des Straßenbereichs vorgegeben. Mit anderen Worten umfasst eine solche Ressource ein Teilareal, welches einen Anteil des Straßenbereichs ausmacht. Hierdurch können sich also Verkehrsteilnehmer in Bezug auf ihre räumliche relative Position zueinander koordinieren. Die Teilflächen zusammengenommen ergeben dabei bevorzugt das gesamte Areal des Straßenbereichs. Insbesondere ist hierbei die Einteilung in mindestens drei oder mindestens vier oder mindestens fünf Ressourcen (Teilflächen) vorgesehen.

In einer Ausführungsform wird zusätzlich oder alternativ als jeweilige Ressource ein Anteil an einer in dem Straßenbereich zulässigen Gesamtlautstärke vorgegeben. Mit anderen Worten können die Verkehrsteilnehmer sich dahingehend abstimmen, dass durch ihre gemeinsame Nutzung des Straßenbereichs eine entstehende Lautstärke eines Verkehrsgeräusche die Gesamtlautstärke nicht überschreitet, sondern kleiner oder gleich der Gesamtlautstärke bleibt.

In einer Ausführungsform wird zusätzlich oder alternativ als jeweilige Ressource ein Anteil an einer in dem Straßenbereich zulässigen Höchstemission vorgegeben. Mit anderen Worten können sich die Verkehrsteilnehmer dahingehend koordinieren, dass eine von ihnen abgegebene Emission kleiner oder gleich dem Wert der Höchstemission bleibt, während Verkehrsteilnehmer den Straßenbereich nutzen. Eine solche Emission kann beispielsweise Kohlendioxid und/oder Stickoxid betreffen.

Durch die Erfindung ist gemäß einem Aspekt eine Steuerschaltung für einen Verkehrsteilnehmer bereitgestellt., wobei die Steuerschaltung dazu eingerichtet ist, die einen Verkehrsteilnehmer betreffenden Schritte einer Ausführungsform des erfindungsgemäßen Verfahrens durchzuführen. Eine solche Steuerschaltung kann für ein Kraftfahrzeug beispielsweise in der beschriebenen Form als Steuergerät oder als Verbund mehrerer Steuergeräte realisiert sein. Eine Steuerschaltung für einen Verkehrsteilnehmer, der als Fußgänger oder Fahrradfahrer am Straßenverkehr im Straßenbereich teilnimmt, kann beispielsweise durch ein Smartphone oder eine Smartwatch oder ein Tablet-PC realisiert sein. Aber auch in einem Kraftfahrzeug kann eine Steuerschaltung in derselben Weise beispielsweise durch ein Smartphone realisiert sein. Die Steuerschaltung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Durch die Erfindung ist gemäß einem Aspekt ein Kraftfahrzeug mit einer Ausführungsform der erfindungsgemäßen Steuerschaltung bereitgestellt. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch Realisierungen, die jeweils eine Kombination der Merkmale mehrerer der beschriebenen Ausführungsformen aufweisen, soweit diese Ausführungsformen nicht ausdrücklich als Alternativen bezeichnet worden sind.

Im Folgenden sind Ausführungsbeispiele der Erfindung beschrieben. Hierzu zeigt:

Fig. 1    eine schematische Darstellung von Ausführungsformen des erfindungsgemäßen Kraftfahrzeug in einem ersten Verkehrsszenario;

Fig. 2    eine Skizze zur Veranschaulichung einer möglichen Einteilungsvorschrift; und

Fig. 3    eine schematische Darstellung von Ausführungsformen des erfindungsgemäßen Kraftfahrzeugs in einem zweiten Verkehrsszenario, in welchem die Einteilungsvorschrift gemäß Fig. 2 genutzt werden kann.

Bei den im Folgenden erläuterten Ausführungsbeispielen handelt es sich um bevorzugte Ausführungsformen der Erfindung. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

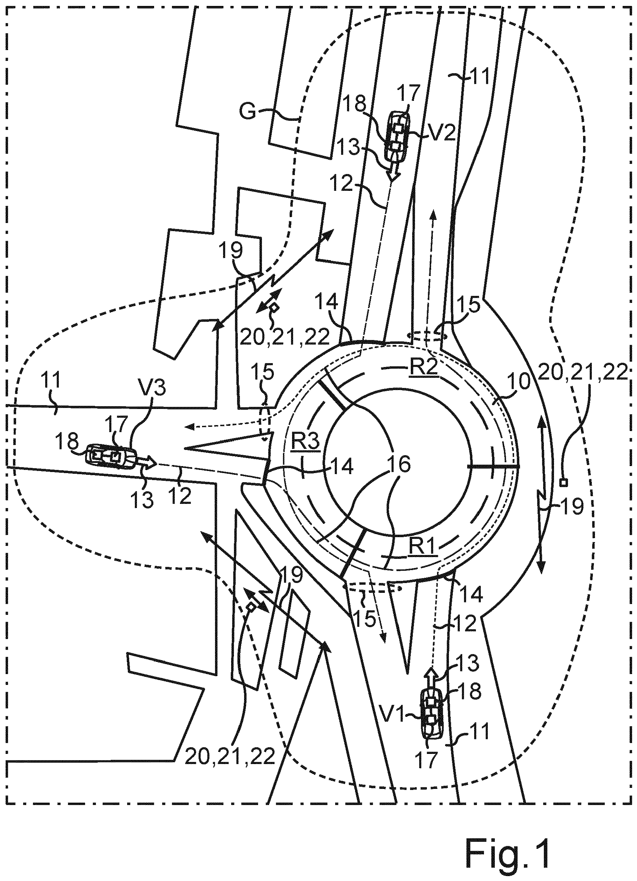

Fig. 1 zeigt einen Straßenbereich 10, bei dem es sich um einen Kreisverkehr handeln kann, über welchen mehrere Straßen 11 miteinander verbunden sind. Auf den Straßen 11 können Verkehrsteilnehmer V1, V2, V3 fahren, die jeweils eine Reisestrecke 12 geplant haben, die sie durch den Straßenbereich 10 hin durchführt. In dem Beispiel sei angenommen, dass die Verkehrsteilnehmer V1, V2, V3 zeitlich derart nahe beieinander an den Straßenbereich 10 eintreffen, dass eine Koordination ihrer Bewegungsmanöver 13, also beispielsweise das Befahren oder allgemein Passieren des Straßenbereichs 10, miteinander koordiniert werden muss. Durch die jeweilige Reisestrecke 12 ergibt sich dabei für jeden Verkehrsteilnehmer V1, V2, V3 eine Eintrittsstelle 14 und eine Austrittsstelle 15 betreffend den Straßenbereich 10. Es kann sich bei einer Eintrittsstelle 14 beispielsweise jeweils um eine Einfahrt und/oder eine Austrittsstelle 15 beispielsweise jeweils um eine Ausfahrt handeln. Innerhalb des Straßenbereichs 10 sollte dabei die Reisestrecke 12 auf Bewegungsrouten 16 verlaufen, die ein kollisionsfreies befahren des Straßenbereichs 10 ermöglichen.

Um diese Bewegungsrouten 16 zu ermitteln, kann jedes Kraftfahrzeug V1, V2, V3 jeweils eine Steuerschaltung 17 mit sich führen, die beispielsweise durch ein Steuergerät oder einen Verbund mehrerer Steuergeräte oder durch ein Smartphone oder eine Smartwatch oder ein Tablet-PC realisiert sein kann, um nur Beispiele für mögliche Steuerschaltungen zu nennen.

Durch die jeweilige Steuerschaltung 17 können jeweils Bewegungsmanöver 13 des jeweiligen Verkehrsteilnehmers V1, V2, V3 entlang der Bewegungsroute 16 ausgelöst oder veranlasst werden, wobei die Bewegungsrouten 16 derart aufeinander abgestimmt sind, dass die Verkehrsteilnehmer ohne gegenseitige Störung und/oder Gefährdung den Straßenbereich 10 passieren können.

In den jeweiligen Verkehrsteilnehmer V1, V2, V3 kann hierzu die Steuerschaltung 17 jeweils mit einer Kommunikationseinrichtung 18 gekoppelt sein, durch welche die Verkehrsteilnehmer V1, V2, V3 oder allgemein die Steuerschaltungen 17 miteinander ein Ad-hoc-Funknetzwerk 19 bilden können, über welches die Steuerschaltunen 17 Nachrichtendaten 20 von Nachrichten (Messages) austauschen können. Durch die Nachrichtendaten 20 kann eine gemeinsam gepflegte Speichereinrichtung 21 in den Verkehrsteilnehmern V1, V2, V3 synchron oder inhaltsgleich gehalten werden. Durch Sendereichweiten der Kommunikationseinrichtungen 18 ergibt sich insgesamt ein Gebiet G, innerhalb welchem alle darin befindlichen Verkehrsteilnehmer V1, V2, V3 mit Steuerschaltung 17 die Speichereinrichtung 21 synchron halten können. Befindet sich vorübergehend kein Verkehrsteilnehmer in dem Gebiet G und tritt dann ein Verkehrsteilnehmer in das Gebiet G ein, so kann dieser als erster die Speichereinrichtung 21 neu aufsetzen oder initialisieren. Als Kommunikationseinrichtung 18 kann beispielsweise ein Mobilfunkmodul oder ein Wi-Fi-Funkmodul vorgesehen sein. Das Ad-hoc-Funknetzwerk 19 kann beispielsweise mittels einer V2X- und/oder V2V-Kommunikation beruhen.

Über die Speichereinrichtung 21 können die Verkehrsteilnehmer V1, V2, V3 Reservierungsdaten 22 austauschen. Die Reservierungsdaten 22 können sich auf Ressourcen R1, R2, R3 des Straßenbereichs 10 beziehen. In Fig. 1 ist dargestellt, wie als Ressourcen R1, R2, R3 Teilflächen oder Fahrspuren oder Fahrspurabschnitte des Straßenbereichs 10 vorgesehen sein können. Die Einteilung des Straßenbereichs 10 in die Ressourcen R1, R2, R3 kann beispielsweise durch Kartendaten einer Straßenkarte der Straßen 11 und des Straßenbereichs 10 erfolgen. Diese Straßenkarte stellt damit eine Einteilungsvorschrift dar, an welche sich die Verkehrsteilnehmer V1, V2, V3 halten müssen oder orientieren müssen, wenn sie eine Ressource R1, R2, R3 in den Reservierungsdaten 22 nennen oder angeben. Die Reservierungsdaten 22 können für eine jeweilige Ressource R1, R2, R3 angeben, dass ein spezifischer Verkehrsteilnehmer V1, V2, V3 diese Ressource R1, R2, R3 für einen vorbestimmten Zeitraum belegen möchte. Die übrigen Verkehrsteilnehmer V1, V2, V3 sind dann über die gemeinsame Speichereinrichtung 21 informiert, wann sich einer der Verkehrsteilnehmer V1, V2, V3 in der Ressource R1, R2, R3 befinden wird.

Die Speichereinrichtung kann eine Datenstruktur beispielsweise in Form einer Blockchain sein. An diese Blockchain kann ein Verkehrsteilnehmer seine eigenen Reservierungsdaten 22 als jeweiligen Datenblock anhängen und dann derart die aktualisierte Blockchain als aktualisierte Speichereinrichtung 21 als Teil der Nachrichtendaten 20 an die übrigen Verkehrsteilnehmer V1, V2, V3 aussenden. Falls zwei oder mehr Verkehrsteilnehmer V1, V2, V3 gleichzeitig ihre lokal gespeicherte Speichereinrichtung 21 aktualisieren und aussenden, so kann mittels einer an sich bekannten Logik für den Abgleich von Speicherdaten oder Speicherinhalten, wir beispielsweise für Blockchains im Stand der Technik bekannt ist, sichergestellt werden, dass alle Verkehrsteilnehmer V1, V2, V3 in ihrer Steuerschaltung 17 denselben Dateninhalt der Speichereinrichtung 21 vorliegen haben.

Beispielsweise kann sich folgendes Verkehrsszenario für drei Fahrzeuge in einem Kreisverkehr ergeben, d. h., die Verkehrsteilnehmer V1, V2, V3 können Kraftfahrzeuge oder kurz Fahrzeuge sein und der Straßenbereich 10 kann in der besagten Weise ein Kreisverkehr sein. Hierbei sei folgendes angenommen: Fahrzeug V1 möchte in Richtung V3, braucht also Ressourcen in der Reihenfolge: R1, R2, R3; Fahrzeug V2 möchte in Richtung V1, braucht also Ressourcen in der Reihenfolge: R2, R3, R1; Fahrzeug V3 möchte in Richtung V2, braucht also Ressourcen in der Reihenfolge: R3, R1, R2.

Insgesamt kann sich für die Verkehrsteilnehmer V1, V2, V3 eine Zeitmatrix oder Ressourcenmatrix ergeben, die der Inhalt der Speichereinrichtung 21 sein kann und in welcher die Reservierungsdaten für einzelne Zeitslots eine Zuordnung von Verkehrsteilnehmer V1, V2, V3 zu der jeweiligen Ressource R1, R2, R3 vorsehen, was in der Weise dargestellt ist, dass jede Zeile einen Verkehrsteilnehmer V1, V2, V3 zugeordnet ist und in der Matrix jede Spalte einen Zeitslot repräsentiert, dessen Beginn und Endzeitpunkt jedem Verkehrsteilnehmer bekannt sind (z.B. 10-Sekunden-Zeitslots): Zeitmatrix/Ressourcematrix mit Reservierungsdaten 22:

$$\begin{pmatrix} V1 \\ V2 \\ V3 \end{pmatrix} \rightarrow \begin{pmatrix} 0 & 0 & R_1 & R_2 & R_3 \\ 0 & R_2 & R_3 & R_1 & 0 & ... \\ 0 & 0 & 0 & R_3 & R_1 \end{pmatrix}$$

Fahrzeug V2 fährt gemäß den Reservierungsdaten 22 in einem früheren Zeitpunkt/Slot in den Kreisverkehr ein und braucht zum Zeitpunkt der Einfahrt von V3 die Ressource von V3, daher muss das Fahrzeug V3 warten. Da aber V1 anschließend sich in der Ressource R2 befindet, wüsste der Fahrer von V3 nicht wann er einfahren kann, da ja V1 potentiell den ganzen Kreisverkehr durchfährt und zu seinem Ursprung fährt. Mit der Blockchain ist der Warteprozess nicht vorhanden, d.h. eine automatisierte Fahrfunktion kann seine Bewegungsroute 16 fortsetzen.

Damit also die Fahrzeuge "unter sich" einem einfachen Mechanismus folgen können, wo jeder berücksichtigt wird und jeder effizient und sicher seiner Route folgen kann, wird ein Blockchain Mechanismus verwendet. Durch die Informationen, die schon in der Blockchain enthalten sind, wissen alle beteiligten Fahrzeuge, dass manche bestimmte Ressourcen von einem Fahrzeug blockiert wurden und welche frei sind, können sich also für freie Ressourcen eintragen. Ressourcen sind in diesem Fall Abschnitte von Straßen. Alle Fahrzeuge, die sich im Umkreis befinden, bekommen die Blockchain Nachricht über eine V2X-Message/Nachricht (Nachrichtdaten 20). Durch vorgegebene Regeln der Blockchain, wissen alle Verkehrsteilnehmer, wie sie sich zu verhalten haben, und wie sie Ressourcen blockieren können. Mit diesen Regeln blockieren und beschreiben die neuen Fahrzeuge einen neuen Block der Blockchain und die darauffolgenden Fahrzeuge empfangen diese Information und wissen daraufhin wiederum, welche Ressourcen sie verwenden können. Wer sich nicht an die Regeln der Blockchain hält, gefährdet dadurch nur sich selbst, daher ist es im Eigeninteresse die Regeln zu beachten. Dieser Konsensus Mechanismus funktioniert nach dem System "Risk of Life".

Dieser Mechanismus funktioniert für alle möglichen Verkehrsszenarien, wo Fahrzeugrouten sich kreuzen, dabei müssen die Regeln der Blockchain für die bestimmte Kreuzungssituation den Verkehrsteilnehmern bekannt sein.

Es ergibt sich ein Mechanismus zur Verkehrsverflüssigung, Unfallreduzierung und allgemeine Implementierung für sicheres vernetztes Fahren in allen möglichen Kreuzungssituationen. Mechanismus funktioniert ohne Kontrolleinheit, die für die Teilnehmer Entscheidungen trifft, sondern die Entscheidung wird kollaborativ getroffen.

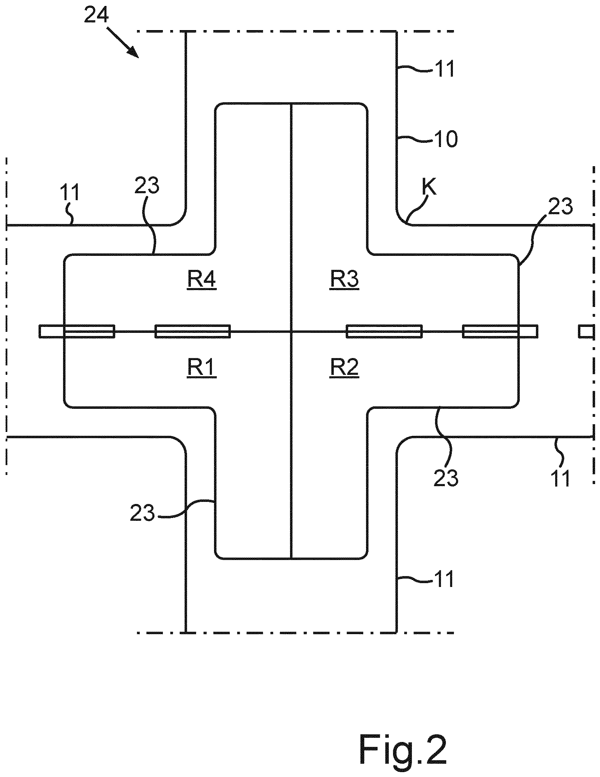

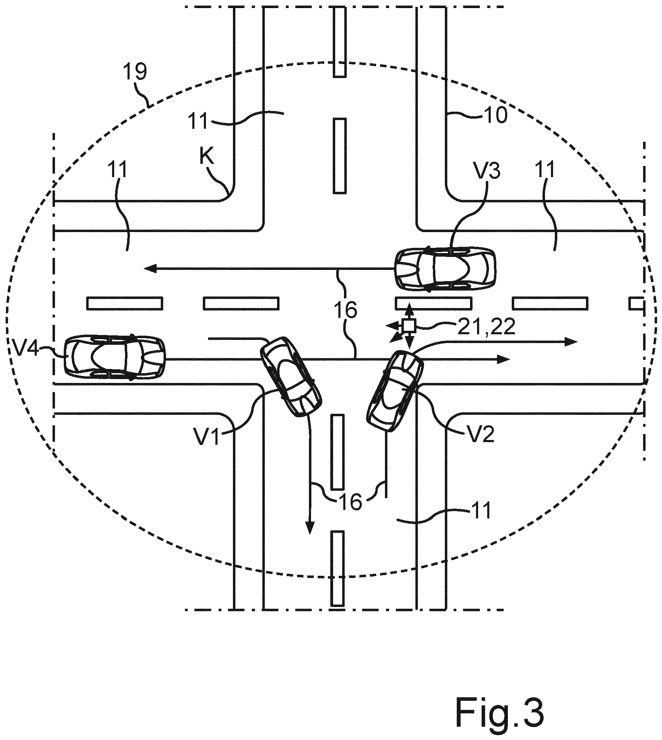

Fig. 2 und Fig. 3 veranschaulichen ein weiteres Verkehrsszenario.

Fig. 2 illustriert hierbei als einen Straßenbereich 10 eine Kreuzung K, an welcher 4 Straßen 11 zusammentreffen. Eine mögliche Einteilung der Kreuzung K in Teilflächen 23, von denen jede eine Ressource R1, R2, R3, R4 darstellt, ist in Fig. 2 veranschaulicht. Diese Einteilung kann durch eine Einteilungsvorschrift 24 vorgegeben sein, die in der beschriebenen Weise beispielsweise Bestandteil von Kartendaten einer digitalen Straßenkarte sein kann.

Fig. 3 veranschaulicht, wie Verkehrsteilnehmer V1, V2, V3, V4 mittels der Einteilungsvorschrift 24 über ein Ad-hoc-Funknetzwerk 19 ihre Bewegungsrouten 16 zeitlich und örtlich in der Kreuzung K koordinieren können. Die Verkehrsteilnehmer V1, V2, V3, V4 können über das Ad-hoc-Funknetzwerk 19 in der beschriebenen Weise als gemeinsam gepflegte Speichereinrichtung 21 beispielsweise eine Blockchain austauschen, in welcher Reservierungsdaten 22 gespeichert sein können.

Für das in Fig. 3 dargestellte Verkehrsszenario können beispielhaft folgende Annahmen gelten: die Verkehrsteilnehmer V1, V2, V3, V4 können Kraftfahrzeuge oder kurz Fahrzeuge sein und der Straßenbereich 10 kann in der besagten Weise eine Kreuzung K sein und dabei braucht Fahrzeug V1 gemäß der von ihm geplanten Reisestrecke die Ressource R1; Fahrzeug V2 möchte rechts abbiegen, braucht Ressource R2; Fahrzeug V3 möchte geradeaus fahren, braucht Ressourcen in der Reihenfolge: R3, R4; Fahrzeug V4 möchte geradeaus fahren, braucht Ressourcen in der Reihenfolge: R1, R2. Es ergibt sich daraus die folgende Zeitmatrix/Ressourcenmatrix:

$$\begin{pmatrix} V1 \\ V2 \\ V3 \\ V4 \end{pmatrix} \rightarrow \begin{pmatrix} 0 & R_1 & R_1 & 0 & 0 \\ 0 & R_2 & R_2 & 0 & 0 \\ 0 & R_3 & R_4 & 0 & 0 \\ 0 & 0 & 0 & R_1 & R_2 \end{pmatrix}$$

Fahrzeug V4 fährt gemäß diesen Reservierungsdaten 22 zu einem späteren Zeitpunkt in die Kreuzung ein, währendem die drei anderen Fahrzeuge ihre Manöver ausführen. Durch die Blockchain der Speichereinrichtung 21 kennt die Steuerschaltung 17 für den Fahrer/ für die automatisierte Fahrfunktion von V4, dass es sein Bewegungsmanöver einfach ausführen kann und keines der Fahrzeuge in der Kreuzung werden den Weg kreuzen/eine Ressource zur gleiche Zeit brauchen wie er, d.h. der Verkehr bleibt flüssig.

Da ein Blockchain Mechanismus sehr viel Speicher und Rechenleistung verlangen kann, kann von einem Bordcomputern eines Kraftfahrzeugs nicht verlangt werden, dass eine Datenbank aller vernetzten Fahrzeuge aufrechterhalten wird. Daher ist die Idee dieses System der Blockchain zwar zu verwenden, aber nur in einem lokalen Sendeumkreis. Da der Umkreis eines Fahrzeugs nicht die gleiche Schnittmenge wie die eines Fahrzeugs 200m weiter ist, wäre eine einzige durchgängige Blockchain nicht möglich. Es gibt aber die Möglichkeit eine Blockchain zu erstellen die nur "Lokal" existiert. Wenn sich Fahrzeuge in diesen Bereich befinden sind sie davon betroffen. Sobald sich die Fahrzeuge außerhalb des Bereiches befinden, beachten sie die Blockchain Nachricht nicht mehr und nachdem sie aus dem Sendebereich der beteiligten Fahrzeuge austreten empfangen sie diese Nachricht auch nicht mehr. Da V2V Messages (Nachrichtendaten 20) nur so weit gehen wie die Signalstärke ermöglicht, wird dadurch diese Blockchain von selbst nur in dem Bereich/Gebiet G angewandt. Dieser Bereich, wo diese Blockchain angewendet wird, ist natürlich dann am nützlichsten wenn solche selbstständige Kommunikation am meisten Vorteile bringt. Das sind also alle möglichen Situationen, wo sich die Fahrzeugwege kreuzen.

Dieser Mechanismus kann sich aber ebenso auf andere Verkehrsteilnehmer, wie z.B. Fußgänger, Fahrradfahrer und Motorräder, ausweiten lassen, solange sie ein Gerät haben, welches die V2X Messages genauso verarbeitet.

Die Idee lässt sich mit verfügbarer Technologie umsetzen. Die lokale Blockchain (allgemein Speichereinrichtung 21) betrifft jeweils nur einen Kreuzungspunkt. Daher haben z.B. zwei Kreuzungen auf einer Straße, die 500m auseinander liegen, jeweils bevorzugt eine eigene lokale Blockchain. Fahrzeuge die durch die erste Kreuzung fahren, beteiligen sich also bei der Blockchain der ersten Kreuzung. Nachdem sie diese durchfahren haben, ignorieren sie diese Nachrichten, empfangen die Nachricht der zweiten Kreuzung mit einer zweiten Blockchain, die anderen regeln folgt, und beteiligen sich bei dieser Blockchain um durch die zweite Kreuzung zu fahren.

Insgesamt zeigen die Beispiele, wie eine kooperative Ressourcenallokation für das Ausführen von Fahrmanövern bereitgestellt werden kann.

**Patentansprüche**

1.  Verfahren zur kooperativen Ressourcenallokation für das Ausführen von Bewegungsmanövern (13) in zumindest einem vorbestimmten Straßenbereich (10), wobei

    der Straßenbereich (10) durch eine vorbestimme Einteilungsvorschrift (24) in mehrere Ressourcen (R1, R2, R3, R4) eingeteilt ist und eine Speichereinrichtung (21) für Reservierungsdaten (22) zum exklusiven Reservieren der jeweiligen Ressource (R1, R2, R3, R4) bereitgestellt wird, die jedem in einem vorbestimmten, den Straßenbereich (10) umfassenden Gebiet (G) befindlichen Verkehrsteilnehmer (V1, V2, V3, V4) zugänglich gemacht wird, und
    eine Steuerschaltung (17) eines jeweiligen Verkehrsteilnehmers (V1, V2, V3, V4), welcher sich dem Straßenbereich (10) nähert und/oder in dem Straßenbereich (10) befindet und in welchem durch eine vorgegebene Reisestrecke (12) eine notwendige Eintrittsstelle (14) in den Straßenbereich (10) und eine notwendige Austrittsstelle (15) aus dem Straßenbereich (10) bekannt ist, eine Bewegungsroute (16) von der Eintrittsstelle (14) zu der Austrittsstelle (15) über zumindest eine oder einige der Ressourcen (R1, R2, R3, R4) hinweg in Abhängigkeit von in der Speichereinrichtung (21) aktuell gespeicherten Reservierungsdaten (22) plant und gemäß der geplanten Bewegungsroute (16) die hierfür benötigten Ressourcen (R1, R2, R3, R4) durch Erzeugen von eigenen Reservierungsdaten (22) in der Speichereinrichtung (21) reserviert und mittels Auslösen von Bewegungsmanövern (13) die zumindest eine Ressource (R1, R2, R3, R4) des Straßenbereichs (10) gemäß den Reservierungsdaten (22) zeitlich nacheinander durch den Verkehrsteilnehmer (V1, V2, V3, V4) belegt werden,
    **dadurch gekennzeichnet, dass**
    als die gemeinsame Speichereinrichtung (21) eine Datenstruktur bereitgestellt wird, die über ein Ad-hoc-Funknetzwerk (19) zwischen den Verkehrsteilnehmern (V1, V2, V3, V4) in dem Gebiet (G) synchronisiert gehalten wird, wobei jeweils ein solcher Verkehrsteilnehmer (V1, V2, V3, V4), der sich dem Straßenbereich (10) allein nähert, für den Fall, dass der Straßenbereich (10) leer ist, die Speichereinrichtung (21) dynamisch generiert, wobei die Datenstruktur eine Blockchain umfasst, in welcher die Reservierungsdaten (22) durch die Steuerschaltung (17) des jeweiligen Verkehrsteilnehmers (V1, V2, V3, V4) als ein jeweiliger neuer Datenblock angehängt werden, wobei die Blockchain von selbst nur in dem Gebiet (G) angewandt wird, wenn sich die Verkehrsteilnehmer (V1, V2, V3, V4) in dem Gebiet (G) befinden, indem die Verkehrsteilnehmer (V1, V2, V3, V4) eine Blockchain-Nachricht nicht mehr beachten, sobald sich die Verkehrsteilnehmer (V1, V2, V3, V4) außerhalb des Gebiets (G) befinden, und nachdem sie aus dem Sendebereich der beteiligten Fahrzeuge austreten, sie Blockchain-Nachrichten auch nicht mehr empfangen.

2.  Verfahren nach Anspruch 1, wobei die jeweiligen Reservierungsdaten (22) die zu reservierende Ressource (R1, R2, R3, R4) und einen Belegungszeitraum für die Ressource (R1, R2, R3, R4) angeben.

3.  Verfahren nach einem der vorhergehenden Ansprüche, wobei bei zumindest einem der Verkehrsteilnehmer (V1, V2, V3, V4) die Reservierungsdaten (22) für die gesamte Bewegungsroute (16) bei Annäherung an den Straßenbereich (10) festgelegt werden.

4.  Verfahren nach einem der vorhergehenden Ansprüche, wobei bei zumindest einem der Verkehrsteilnehmer (V1, V2, V3, V4) die Reservierungsdaten (22) dynamisch in mehreren Schritten in die Speichereinrichtung (21) eingetragen werden, während sich der jeweilige Verkehrsteilnehmer (V1, V2, V3, V4) in dem Straßenbereich (10) befindet.

5.  Verfahren nach einem der vorhergehenden Ansprüche, wobei durch zumindest einen der Verkehrsteilnehmer (V1, V2, V3, V4) die Reservierungsdaten (22) zum Umbuchen zumindest einer Ressource (R1, R2, R3, R4) geändert und/oder ergänzt werden, während sich der jeweilige Verkehrsteilnehmer (V1, V2, V3, V4) in dem Straßenbereich befindet.

6.  Verfahren nach einem der vorhergehenden Ansprüche, wobei als die Einteilungsvorschrift (24)

    a) eine digitale Straßenkarte zugrunde gelegt wird, in welcher die Ressourcen (R1, R2, R3, R4) für ein Straßennetz definiert sind, und/oder
    b) Schwarmdatenpunkte angegeben sind, durch welche die Ressourcen identifiziert sind, und/oder

c) geographische Abschnitte nach einem GNSS-Datenformat angegeben sind.

7. Verfahren nach einem der vorhergehenden Ansprüche, wobei als jeweilige Ressource (R1, R2, R3, R4) eine Teilfläche (23) des Straßenbereichs (10) vorgeben ist.

8. Verfahren nach einem der vorhergehenden Ansprüche, wobei als jeweilige Ressource (R1, R2, R3, R4) ein Anteil an einer in dem Straßenbereich (10) zulässigen Gesamtlautstärke vorgegeben ist.

9. Verfahren nach einem der vorhergehenden Ansprüche, wobei als jeweilige Ressource (R1, R2, R3, R4) ein Anteil an einer in dem Straßenbereich (10) zulässigen Höchstemission vorgegeben ist.

10. Steuerschaltung (17) für einen Verkehrsteilnehmer (V1, V2, V3, V4), wobei die Steuerschaltung (17) dazu eingerichtet ist, die einen Verkehrsteilnehmer (V1, V2, V3, V4) betreffenden Schritte eines Verfahrens nach einem der vorhergehenden Ansprüche durchzuführen.

11. Kraftfahrzeug mit einer Steuerschaltung (17) nach Anspruch 10.


**Claims**

1. Method for cooperative resource allocation for performing movement manoeuvres (13) in at least one predetermined road area (10), wherein

the road area (10) is divided into multiple resources (R1, R2, R3, R4) by a predetermined division rule (24) and a storage apparatus (21) for reservation data (22) for exclusively reserving the respective resource (R1, R2, R3, R4) is provided and is made accessible to each road user (V1, V2, V3, V4) located in a predetermined zone (G) comprising the road area (10), and
a control circuit (17) of a respective road user (V1, V2, V3, V4) which is approaching the road area (10) and/or is located in the road area (10) and in which a necessary entry point (14) into the road area (10) and a necessary exit point (15) from the road area (10) are known through a predefined travel route (12), plans a movement route (16) from the entry point (14) to the exit point (15) over at least one or some of the resources (R1, R2, R3, R4) on the basis of reservation data (22) currently stored in the storage apparatus (21) and, in accordance with the planned movement route (16), the resources (R1, R2, R3, R4) required therefore are reserved by generating dedicated reservation data (22) in the storage apparatus (21) and, by triggering movement manoeuvres (13), the at least one resource (R1, R2, R3, R4) of the road area (10) is occupied successively in time by the road user (V1, V2, V3, V4) in accordance with the reservation data (22),
**characterised in that**
as the common storage apparatus (21), a data structure is provided which is kept synchronised via an ad hoc radio network (19) between the road users (V1, V2, V3, V4) in the zone (G), wherein in each case such a road user (V1, V2, V3, V4) approaching the road area (10) alone, in the event that the road area (10) is empty, dynamically generates the storage apparatus (21), wherein the data structure comprises a blockchain in which the reservation data (22) are stored by the control circuit (17) of the respective road user (V1, V2, V3, V4) as a respective new data block, wherein the blockchain is applied by itself only in the zone (G) when the road users (V1, V2, V3, V4) are located in the zone (G), due to the fact that the road users (V1, V2, V3, V4) no longer pay attention to a Blockchain message as soon as the road users (V1, V2, V3, V4) are located outside the zone (G), and after they leave the transmission range of the vehicles involved, they also no longer receive Blockchain messages.

2. Method according to claim 1, wherein the respective reservation data (22) indicate the resource (R1, R2, R3, R4) to be reserved and an occupancy period for the resource (R1, R2, R3, R4).

3. Method according to any of the preceding claims, wherein, for at least one of the road users (V1, V2, V3, V4), the reservation data (22) for the entire movement route (16) are established when approaching the road area (10).

4. Method according to any of the preceding claims, wherein, for at least one of the road users (V1, V2, V3, V4), the reservation data (22) are dynamically entered into the storage apparatus (21) in multiple steps while the respective road user (V1, V2, V3, V4) is located in the road area (10).

**5.** Method according to any of the preceding claims, wherein, in order to rebook at least one resource (R1, R2, R3, R4), the reservation data (22) are changed and/or added to by at least one of the road users (V1, V2, V3, V4) while the respective road user (V1, V2, V3, V4) is located in the road area.

**6.** Method according to any of the preceding claims, wherein, as the division rule (24)

    a) as a basis, a digital road map is used in which the resources (R1, R2, R3, R4) for a road network are defined, and/or
    b) swarm data points are indicated by which the resources are identified, and/or
    c) geographical sections are indicated according to a GNSS data format.

**7.** Method according to any of the preceding claims, wherein a partial surface (23) of the road area (10) is predefined as the respective resource (R1, R2, R3, R4).

**8.** Method according to any of the preceding claims, wherein a proportion of a total sound volume permissible in the road area (10) is predefined as the respective resource (R1, R2, R3, R4).

**9.** Method according to any of the preceding claims, wherein a proportion of a maximum emission level permissible in the road area (10) is predefined as the respective resource (R1, R2, R3, R4).

**10.** Control circuit (17) for a road user (V1, V2, V3, V4), wherein the control circuit (17) is configured to perform the steps, relating to a road user (V1, V2, V3, V4), of a method according to any of the preceding claims.

**11.** Motor vehicle having a control circuit (17) according to claim 10.


**Revendications**

**1.** Procédé d'allocation coopérative de ressources pour l'exécution de manœuvres de déplacement (13) dans au moins une zone routière prédéterminée (10), dans lequel

    la zone routière (10) est divisée en une pluralité de ressources (R1, R2, R3, R4) par une règle de division (24) prédéterminée et un appareil de stockage (21) pour des données de réservation (22) est fourni pour réserver exclusivement la ressource (R1, R2, R3, R4) respective qui est rendue accessible à chaque usager de la route (V1, V2, V3, V4) se trouvant dans une zone prédéterminée (G) comprenant la zone routière (10), et
    un circuit de commande (17) d'un usager de la route (V1, V2, V3, V4) respectif, lequel s'approche de la zone routière (10) et/ou se trouve dans la zone routière (10) et dans lequel un point d'entrée (14) nécessaire dans la zone routière (10) et un point de sortie (15) nécessaire de la zone routière (10) sont connus par un trajet de voyage (12) prédéfini, planifie un itinéraire de déplacement (16) du point d'entrée (14) au point de sortie (15) en passant par au moins une ou quelques-unes des ressources (R1, R2, R3, R4) en fonction de données de réservation (22) actuellement mémorisées dans l'appareil de stockage (21) et, selon l'itinéraire de déplacement (16) planifié, les ressources (R1, R2, R3, R4) nécessaires à cet effet sont réservées dans l'appareil de stockage (21) par production de données de réservation (22) propres et, au moyen du déclenchement de manœuvres de déplacement (13), la au moins une ressource (R1, R2, R3, R4) de la zone routière (10) est occupée successivement dans le temps par l'usager de la route (V1, V2, V3, V4) conformément aux données de réservation (22),
    **caractérisé en ce que**
    une structure de données est fournie en tant qu'appareil de stockage commun (21), qui est maintenue synchronisée entre les usagers de la route (V1, V2, V3, V4) dans la zone (G) via un réseau radio ad hoc (19), dans lequel un tel usager de la route (V1, V2, V3, V4) qui s'approche seul de la zone routière (10) génère dynamiquement l'appareil de stockage (21) dans le cas où la zone routière (10) est vide, dans lequel la structure de données comprend une chaîne de blocs dans laquelle les données de réservation (22) sont ajoutées par le circuit de commande (17) de l'usager de la route respectif (V1, V2, V3, V4) comme un nouveau bloc de données respectif, dans lequel la chaîne de blocs est appliquée d'elle-même uniquement dans la zone (G) lorsque les usagers de la route (V1, V2, V3, V4) se trouvent dans la zone (G), **en ce que** les usagers de la route (V1, V2, V3, V4) ne tiennent plus compte d'un message de chaîne de blocs dès que les usagers de la route (V1, V2, V3, V4) se trouvent en dehors de la zone (G), et après qu'ils sortent de la zone d'émission des véhicules impliqués, ils ne reçoivent plus non plus de messages de chaîne de blocs.

**2.** Procédé selon la revendication 1, dans lequel les données de réservation respectives (22) indiquent la ressource (R1, R2, R3, R4) à réserver et une période d'occupation pour la ressource (R1, R2, R3, R4).

**3.** Procédé selon l'une quelconque des revendications précédentes, dans lequel, pour au moins l'un des usagers de la route (V1, V2, V3, V4), les données de réservation (22) sont fixées pour l'ensemble de l'itinéraire de déplacement (16) à l'approche de la zone routière (10).

**4.** Procédé selon l'une quelconque des revendications précédentes, dans lequel, pour au moins l'un des usagers de la route (V1, V2, V3, V4), les données de réservation (22) sont enregistrées de manière dynamique en plusieurs étapes dans l'appareil de stockage (21), tandis que l'usager de la route (V1, V2, V3, V4) respectif se trouve dans la zone routière (10).

**5.** Procédé selon l'une quelconque des revendications précédentes, dans lequel les données de réservation (22) pour le transfert d'au moins une ressource (R1, R2, R3, R4) sont modifiées et/ou complétées par au moins l'un des usagers de la route (V1, V2, V3, V4), tandis que l'usager de la route (V1, V2, V3, V4) respectif se trouve dans la zone routière.

**6.** Procédé selon l'une quelconque des revendications précédentes, dans lequel, en tant que règle de division (24)

   a) on se base sur une carte routière numérique dans laquelle les ressources (R1, R2, R3, R4) sont définies pour un réseau routier, et/ou
   b) des points de données d'essaimage sont indiqués, par lesquels les ressources sont identifiées, et/ou
   c) des sections géographiques sont indiquées selon un format de données GNSS.

**7.** Procédé selon l'une quelconque des revendications précédentes, dans lequel une surface partielle (23) de la zone routière (10) est prédéfinie comme ressource (R1, R2, R3, R4) respective.

**8.** Procédé selon l'une quelconque des revendications précédentes, dans lequel une part d'un volume sonore total admissible dans la zone routière (10) est prédéfinie comme ressource respective (R1, R2, R3, R4).

**9.** Procédé selon l'une quelconque des revendications précédentes, dans lequel une part d'une émission maximale autorisée dans la zone routière (10) est prédéfinie comme ressource respective (R1, R2, R3, R4).

**10.** Circuit de commande (17) pour un usager de la route (V1, V2, V3, V4), dans lequel le circuit de commande (17) est adapté pour mettre en œuvre les étapes concernant un usager de la route (V1, V2, V3, V4) d'un procédé selon l'une quelconque des revendications précédentes.

**11.** Véhicule automobile avec un circuit de commande (17) selon la revendication 10.

Fig.1

24

11

10

11    23

K    23

R4    R3

R1    R2

23    23

11

23    11

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 108492550 A
- EP 3316657 A1
- EP 3386142 A1
- EP 3525158 A1

**In der Beschreibung aufgeführte Nicht-Patentliteratur**

- **LEI ZHANG et al.** Blockchain based secure data sharing system for Internet of vehicles: A position paper. *Vehicular Communications,* 01. April 2019, vol. 16